# EUROPEAN PATENT APPLICATION

(11) **EP 2 420 414 A1**
(43) Date of publication of application: **22.02.2012**
(21) Application number: 11177324.8
(22) Date of filing: 11.08.2011
(51) Int. Cl.: B60R 21/2165

(54) **Invisible tear seam for an air bag deployment door**

(30) Priority: 16.08.2010 US 857046
(71) Applicant: Automotive Components Holdings, LLC, Dearborn, MI 48120 (US)
(72) Inventor: KALISZ, Raymond E., Livonia, MI Michigan 48154 (US)
(74) Representative: Giles, Ashley Simon

(57) **Abstract**

A cover panel (10) for the air bag in an automotive vehicle (100) with an invisible deployment door section (16) defined by pre-weakened tear seam (12) formed on the underside of the instrument panel base substrate during the base substrate molding process. Tear seams are formed into the underside of the base substrate by a continuous partial protrusion element and elongated and spaced apart full protrusion elements extending from a lower surface mold preform to define a continuous void path that extends into a portion of the substrate and a series of spaced apart and elongated voids that extend fully through only the base substrate of the laminated cover panel structure to form pre-weakened bridges of substrate material that is pre-weakened in both thickness and length dimensions along the defined tear path.

## Description

### Related Applications

This application is related to commonly assigned non-provisional application USSN 12/111684 filed 4/29/2008, and published as 2009/0267329 on 10/29/2009; non-provisional application USSN 12/335795 filed 12/15/2008, and published as 2010/0147129 on 06/17/2010; and US patent No.7631890, which are incorporated herein by reference.

### Field of the lnvention

This invention relates to the field of air bag deployment covers for an automotive vehicle and more particularly to the area of a door panel structure that has a pre-weakened hinge and tearable seams formed for air bag deployment.

### Summary

The described embodiment is directed to an improved apparatus and method for providing invisible hinge and seams to define the air bag opening cover such as is located on the passenger side instrument panel of an automotive vehicle. The embodiment is also suited for a driver side steering wheel mounted air bag system or any other location where a pre-weakened and externally invisible tear seam is required.

With the variety of materials increasing for automotive interiors, it has been found that conventional scoring and pre-weakening techniques are not always effective to ensure that a deployment door can be formed which is invisible to the vehicle occupants, has the strength properties to resist inward pressures and opens properly during air bag deployment. The described embodiment is preferably implemented by forming the hinge and tear seams into the substrate layer as the substrate is being molded and prior to flowing the foam layer between the substrate and outer skin for the instrument panel. However, the hinge and tear seams could be machined into the substrate layer following molding.

It is an object of the described embodiments to provide a defined air bag deployment door for an automotive vehicle that is substantially invisible from the occupant section of the vehicle and that functions to properly open upon air bag deployment. The deployment door includes a relatively rigid base substrate structure having an outer surface and an inner surface and a relatively constant thickness between the surfaces surrounding a defined deployment door. A foam layer is adhesively attached to the outer surface of the substrate and an outer finish skin material is adhesively attached to and overlies the foam layer.

The base substrate structure is molded to define the inner and outer surfaces and the deployment door section. The deployment door section is defined in the molded structure by reduced thicknesses along the tear seam path formed into the inner surface. Elongated and spaced apart bridge elements formed at the top of the base substrate are separated along the tear seam path by complete voids in the substrate that combine to define the tear path for the air bag deployment door. The bridge elements are pre-weakened by a both a single reduced length dimension and a reduced thickness dimension, each of which run along the defined tear path.

It is another object of the described embodiments to provide a method of forming and defining an air bag deployment door in an automotive vehicle that allows the deployment of an air bag and comprises the following steps:
providing a mold for a panel substrate having a plurality of mold preforms placed in a spaced apart configuration for forming the substrate with upper and lower surfaces in an area that will define the deployment door of a first predetermined thickness; providing a mold preform for forming the lower substrate surface in the area that will define the deployment door; providing an opposing mold preform for forming the upper substrate surface in the area that will define the deployment door; providing the lower surface mold preform with a plurality of spaced apart and elongated protrusion elements entering the space between the mold preforms to define a plurality of tear seam indentations in the lower surface, wherein the protrusion elements alternate between a partial protrusion element and a complete protrusion element of the space between the preforms; providing the opposing perform to form a non-indented and smooth substrate surface at least in those areas facing where protrusion elements enter the space between the performs; flowing a liquid phase of the substrate material between the mold preforms; and allowing substrate material between the mold preforms to set to a self-supporting solid before removing the panel substrate from the mold preforms.

### Brief Description of the Drawings

Figure 1 is a perspective view of a portion of an interior of an automotive vehicle with defined air bag deployment doors.

Figure 2 is a perspective view of a die that may be used to form a defined tear seam or hinge portion of an air bag deployment door.

Figure 2A is a top view of a portion of the die shown in Figure 2.

Figure 3 is a cross-sectional view taken along section line III-III in Figure 2 of a portion of the mold preforms placed for molding the base substrate of the airbag deployment door to illustrate the effect of the partial protrusion on the base substrate.

Figure 4 is a cross-sectional view taken along section line IV-IV in Figure 2 of a portion of the mold preforms placed for molding the base substrate of the airbag deployment door to illustrate the effect of the full protrusion element on the base structure.

Figure 5 is a lengthwise cross-sectional view taken along section line V-V in Figure 2 of a portion of the mold preforms placed for molding the base substrate of the airbag deployment door to illustrate the tear seam formed in the base substrate.

Figure 6 is a cross-sectional view of a portion of the laminated layers of the airbag deployment door following forming of the base substrate, taken along the same section line as Figure 3 to illustrate the reduced thickness of a bridge element formed in the base substrate.

Figure 7 is a cross-sectional view of a portion of the laminated layers of the airbag deployment door following forming of the base substrate, taken along the same section line as Figure 4 to illustrate the void created between bridge elements formed in the base substrate.

Figure 8 is a lengthwise cross-sectional view of a portion of the laminated layers of the airbag deployment door following forming of the base substrate, taken along the same section line as Figure 5 to illustrate both the bridges and voids that define the tear seam path.

Figure 9 is a perspective view of a portion of an alternative die that may be used to form a defined tear seam of an air bag deployment door in a base substrate.

Figure 10 is a representation of the instrument panel and air bag deployment door containing disclosed embodiments.

Figure 10A is an enlarged view of a portion of a first embodiment of the pre-weakened seam in the air bag deployment door shown in Figure 10.

Figure 10B is an enlarged view of a portion of an alternative embodiment of the pre-weakened seam in the air bag deployment door shown in Figure 10.

### Detailed Description

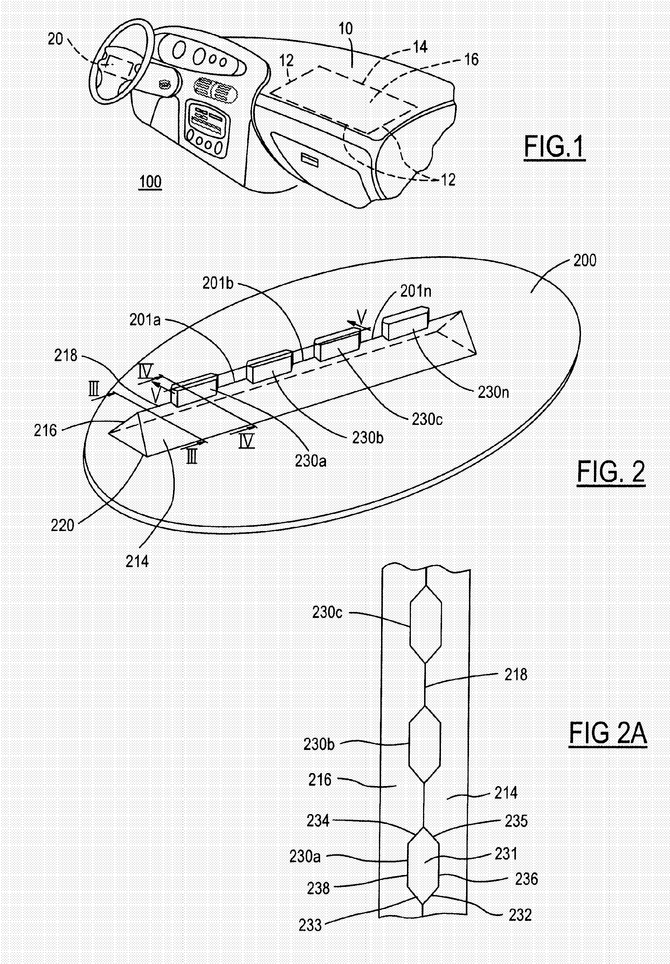

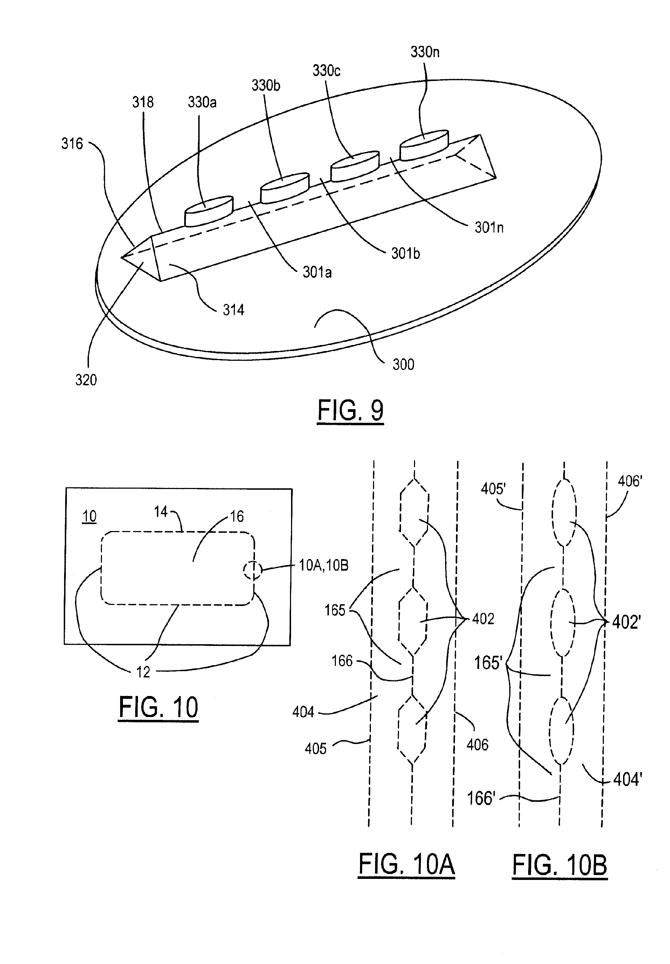

Figure 1 represents a typical vehicle instrument panel 10 in an automotive vehicle 100 into which any of the described embodiments may be included. Additionally, the embodiments are suitable for inclusion in a steering wheel air bag module 20. An air bag deployment door 16 is shown as being defined by tear seams 12 and a hinge portion 14. ln Figures 10, 10A and 10B, first and second embodiments of a pre-weakened tear seam and hinge are represented enlarged and as invisible to the vehicle occupant. Figures 2 - 8 are enlargement views of elements from a sample portion of a mold preform used to define the tear seam 12. Similar tear seams can be defined in the steering wheel hub substrate. While the instrument panel air bag deployment door 16 typically may have a "C" shaped configuration with a single hinge portion, the steering wheel air bag deployment door typically may have an "H" shaped configuration with two hinges. The described embodiments are suitable for any air bag deployment door configurations.

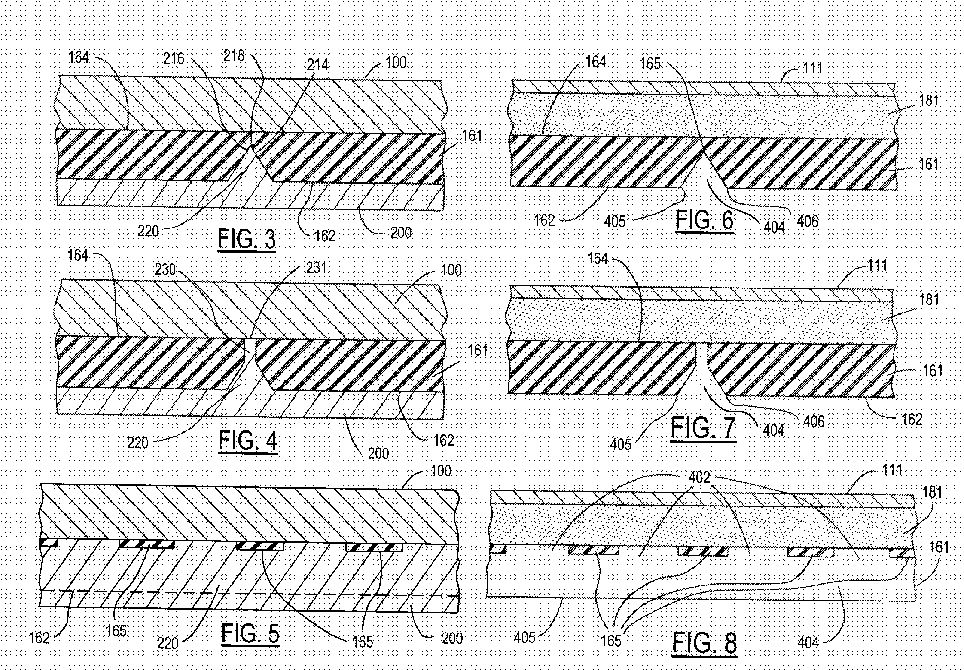

ln Figure 3, a base substrate 161 is shown which is first molded to a predetermined configuration employing a pre-weakened seam, prior to being used for the base of the instrument panel and an air bag deployment door. The base substrate is formed by a method that includes providing a mold for a panel substrate having a plurality of mold preforms 100 and 200 placed in a spaced apart configuration for forming the substrate161 with upper and lower surfaces in an area that will define the deployment door of a first predetermined thickness. A mold preform, such as die plate 200 shown in Figures 2 and 2A, is used for forming the lower substrate surface 162 in the area that will define the deployment door. An opposing mold preform 100 is used for forming the upper substrate surface 164 in the area that will define the deployment door. Die plate 200 is provided with an elongated partial protrusion element 220 and plurality of spaced apart and elongated full protrusion elements 230a - 230n entering the space between the mold preforms to define at least one hinge seam 14 and a plurality of tear seam 12. Partial die protrusion element 220 defines a door seam tear path with a triangular cross-section in the form of a polyhedron that enters lower surface162 and extends partially through the thickness of the substrate. When molded, partial die protrusion element 220 forms a void 404 in the molded base substrate 161 that runs continuously along the tear path. Full protrusion elements 230a - 230n extend from the upper edge 218 of partial protrusion element 220 and are separated by spaces 201a-201n. In the mold, the full protrusion elements 230a - 230n preferably abut the underside of mold preform 100 and provide an elongated series of voids in the base substrate 161 that alternate between a partial void 404 and a complete void of combined 404/402 as seen in Figures 6-8. The spaces 201 a - 201 n result in base substrate material forming bridges 165 that are pre-weakened by a reduced length dimension and reduced thickness dimension along the tear path line.

The substrate base 161 is formed by flowing a liquid phase plastic material - preferably a TPO (Thermoplastic Olefin) - between the mold preforms 100 and 200. By allowing substrate material between the mold preforms to cool and set for a predetermined period of time before removing the panel substrate from the mold preforms, a self-supporting solid base structure 161 is formed with pre-weakened tear seams 12 and hinge 14.

Figures 2 and 2A provide detail of a first embodiment of the die configuration utilized to achieve the molded in a pre-weakened tear seam path that defines an air bag deployment door in base substrate 161. The protrusion part of die 200 includes an elongated partial protrusion element 220 which has a generally polyhedron prism shape with a triangular cross-section containing faces 214 and 216 that run along its length. Although only a small section is shown in Figures 2 and 2A, it is understood that protrusion element 220 continuously extends along a path to outline and define tearable seam 12 of air bag deployment door 16.

Elongated full protrusion elements 230a-230n extend from upper edge 218 of partial protrusion element 220 and are separated by spaces 201 a -201 n. Each full protrusion element 230 contains a top portion 231 that abuts the surface of upper mold preform 100. Upright end walls 232, 233, 234 and 235 combine with side surfaces 236 and 238 to provide an elongated polyhedral or diamond shape to the voids 402 (Figures 7 and 8) that are molded into base substrate 161. The planar end walls 232/ 233 and 234/235 of elongated full protrusion elements 230a - 230n meet at acute angels to define narrow ends aligned along the tear seam path. With that elongated and generally pointed shape, bridge 165 of base material that is left between each void 402 created by each full protrusion element 230 has a narrowed and diminished length dimension of substrate material that runs along the defined tear seam path.

Since it is desirable to create a hinge seam that freely flexes but does not separate or tear during air bag deployment, the hinge portion 14 of die 200 would include a partial protrusion element 220 extending along and defining the hinge path. In most cases, it would not be necessary to include full protrusion elements when forming a hinge path.

In Figures 6, 7 and 8, the completed laminated structure of the panel containing the air bag deployment door is shown in various cross-sections.

Subsequent to forming the base substrate 161, an intermediate TPO foam layer 181 is adhesively attached to the upper surface 164 of base substrate 161. A class "A" outer skin 111, also preferably a TPO material, is adhesively attached to foam layer 181 to complete the lamination process. During implementation of the laminating process, the layers are subjected to a vacuum applied to the underside of the base layer 161 to draw down the layers during curing of the adhesive layers. While it is common to provide vent holes in the base to support the vacuum lamination process, voids 402 created along the tear seams and hinge provide additional access for vacuum to be applied to the layers.

In Figure 6, the cross-section illustrates the triangular polyhedral shaped void 404, created by elongated partial protrusion element 220, extends from break 405 to break 406 in lower surface 162 of base substrate 161. Void 404 is separated from upper surface 164 of base substrate 161 by a bridge of base substrate material 165 that was allowed to flow into each space 201 defined between each full protrusion element 230. The top ridge of void 404 runs along the defined tear seam and extends into each bridge element 165, resulting in a reduced thickness along the length of bridge 165.

In Figure 7, the cross-section illustrates how each void 404/402, created by elongated partial protrusion element 220 and a full protrusion element 230, provide a complete opening in the base structure 161. These voids are located between each bridge 165 and, together with the bridges 165, define the weakened tear seam path 12 of the air bag deployment door 16.

ln Figure 8, the cross-section of the laminated structure taken lengthwise along a seam portion illustrates voids 402 above partial voids 404 separated by bridges 165 of substrate material 161. In this embodiment, the bridges are of equal length and the voids are of equal length in a hinge path. The same may be provided for a tear seam path, except where the designer of the system may want to vary the weakness of the seam in order to determine which portion opens first during an air bag deployment. In such as case, the length of bridges may be decreased or voids may be lengthened or some combination to achieve the desired result.

The series of bridges 165 along the tear seam path together provide the strength necessary to maintain smooth and invisible tear seam structure of the base material. Because of the elongated and generally pointed shape of the voids 402 shown in Figures 6-8, as viewed through the cross-section of the base substrate 161 and Figures 10 and 10A (as invisibly viewed from above the instrument panel 10), the bridge element 165 of base material161 that is left between each void 402 has a narrowed and diminished material composition that extends from break 405 to break 406. This results in a single reduced dimension that runs along the centerline 166 of the defined tear seam path, from one bridge 165 to another. Combined with the reduced thickness line, the pre-weakened path in each bridge 165 becomes predictable and defined.

The series of bridges 165 are at the top of the substrate, flush with the upper surface 164, and are pre-weakened both by the reduction in length between the indentations formed at each end and by the reduced thickness dimension provided by the top of triangular void 404 formed in their lower surfaces. The weakening end indentations as well as the top of the triangular void 404 each run along the centerline of the tear seam path. This combination of indented ends, triangular thicknesses, along with adjacent voids provide a tear seam that is weak enough to cleanly and precisely control the tear path for the defined deployment door during an air bag deployment event.

An alternative embodiment configuration for the elongated full protrusion elements of a die 300 are shown in Figure 9. In Figure 9, full protrusion elements 330a ― 330n are illustrated as ellipses or ovals extending upwards from the upper edge 318 of a prism shaped partial protrusion element 320 having side faces 314 and 316. In this embodiment, full protrusion elements 330 - 330n are separated by spaces 301 a- 301 n, which result in bridge elements165' being formed during molding of the base substrate (also see Figures 10 and 10B).

As further illustrated in Figures 10 and 10B, the series of bridges 165' and voids 402' along the tear seam path together provide the strength necessary to maintain smooth and invisible seam structure of the base substrate. Because of the elongated and generally truncated shape of the ends of voids 402', as invisibly viewed from above the instrument panel 10, the bridge 165' of base substrate material that is present between each void 402' has a narrowed and diminished material composition that results in a single reduced dimension running along the centerline166' of the defined tear seam path from one bridge 165' to another.

The series of bridges 165' are at the top of the substrate, flush with the upper surface 164, and are pre-weakened both by the reduction in length between the indentations formed at each end by protrusion elements 330 and by the top of triangular void 404' formed in their lower surfaces by partial protrusion element 320. The weakest portion of each bridge 165' is defined by the least length dimension provided by the end indentations, as well as the least thickness defined by the top of the triangular void 404 to purposely coincide with the centerline 166' of each bridge 165' and precisely define the tear seam path. This combination of indented ends, triangular thicknesses, along with adjacent voids provide seams that are weak enough to cleanly and precisely control the tear path for the defined deployment door during an air bag deployment event. The combination also coincides with the center line of each bridge and is strong enough to provide support for the laminated layers that provide the desired smooth surface in which the tear seam is invisible to the vehicle occupant.

Each embodiment has the common characteristic of providing in-mold pre-weakened tear seam of an air bag deployment door in the base substrate material of a subsequently laminated panel structure, wherein each seam is made up of a continuous void path that extends into a portion of the substrate and a series of spaced apart and elongated voids that extend through only the base substrate of the laminated panel structure. This configuration provides a series of pre-weakened substrate bridge elements which are able to fracture and separate during air bag deployment along a predetermined and precise tear seam path.

As can be seen by the drawings and accompanying explanation, the described embodiments are unique improvements over conventional air bag deployment door path configurations. And while the embodiments shown here are preferred, they shall not be considered to be a restriction on the scope of the claims set forth below.

## Claims

1. A panel for an automotive vehicle that contains a defined air bag deployment door, comprising:
a relatively rigid base substrate structure having an outer surface and an inner surface;
layers of sheet material being attached to and overlying said outer surface;
said base structure being formed to define said inner and outer surfaces and a deployment door section; and
said deployment door section being defined in said base structure by a path of a first reduced thickness in a tear seam formed into said inner surface and spaced apart elongated areas having no thickness in a series along said path and maintaining said defined deployment door invisible when viewed from the outer surface.

2. A panel as in claim 1, wherein said substrate is formed to have a generally constant thickness between said inner and outer surfaces in the area surrounding the defined deployment door.

3. A panel as in claim 1, wherein said layers of sheet material include a foam layer and a protective skin layer, wherein said foam layer is laminated between said outer surface of said base layer and said skin layer.

4. A panel as in claim 3, wherein and said base substrate, and said foam and skin layers are a TPO material.

5. A panel as in claim 1, wherein said elongated areas along said path have polyhedral shapes with planar walls that meet at acute angels to define narrow ends aligned along said path.

6. A panel as in claim 1, wherein said elongated areas along said path have generally oval shapes with a continuous wall define leading ends aligned along said path.

7. A panel as in claim 1, wherein said elongated areas are separated by pre-weakened bridges formed of substrate material, wherein each bridge is pre-weakened due to reduced length dimension along the tear path in a predetermined line between said elongated areas and by a reduced thickness dimension along said predermined tear path line.

8. A panel as in claim 1, wherein said elongated areas in said path are separated by pre-weakened bridges formed of substrate material, wherein each bridge is pre-weakened due to a single reduced length dimension along the tear path in a predetermined line joining said elongated areas and by a reduced thickness dimension along said predetermined tear path line.

9. A panel for an automotive vehicle that contains a defined air bag deployment door, in which a pre-weakened tear seam of an air bag deployment door is formed in the base substrate material of a subsequently laminated panel structure, wherein said seam portion is made up of a continuous partial void path that extends into a portion of the substrate and a series of spaced apart and elongated voids above said partial void path that extend through the base substrate of the laminated panel structure.

10. A panel as in claim 9, wherein said series of spaced apart and elongated voids above said partial void path extend only through the base substrate of the laminated panel structure.

11. A panel as in claim 10, wherein said elongated voids are separated by pre-weakened bridges formed of substrate material, and each bridge is pre-weakened due to reduced length dimension along a predetermined line between said elongated areas and by a reduced thickness dimension along said predetermined line to define the pre-weakened tear seam path therein.

12. A panel as in claim 10, wherein said elongated voids in said path are separated by pre-weakened bridges formed of substrate material, wherein each bridge is pre-weakened due to a single reduced length dimension along the tear path in a predetermined line joining said elongated areas and by a reduced thickness dimension along said predetermined tear path line.

13. A panel as in claim 10, wherein said elongated voids along said path have polyhedral shapes with planar walls that meet at acute angels to define narrow ends aligned along said path.

14. A panel as in claim 10, wherein said elongated voids along said path have generally oval shapes with a continuous wall define leading ends aligned along said path.

15. A method of forming an invisible door in an instrument panel of an automotive vehicle for allowing the deployment of an air bag, comprising the steps of:
providing a mold for an instrument panel substrate with a plurality of mold preforms placed in a spaced apart configuration for forming said substrate with upper and lower surfaces in an area that will define said deployment door of a first predetermined thickness;
providing one of said mold preforms to form said lower substrate surface at least in the area that will define said deployment door;
providing another of said mold preforms opposing and separated from said lower surface mold preform by a predetermined distance for forming said upper surface at least in the area that will define said deployment door having a predetermined thickness dimension;
providing said lower surface mold preform with a plurality of protrusion elements entering said space between said mold preforms to define a tear seam in said lower surface;
providing said upper surface mold perform to form a non-indented and smooth substrate surface at least in those opposing areas where said protrusion elements of said lower surface mold preform enter said space between said mold performs;
providing a primary protrusion, for said tear seam at a first predetermined height that is less than said predetermined separation distance, extending into said space between said mold preforms and running in a continuous line that defines a tear seam for said deployment door;
providing a secondary set of elongated and spaced apart protrusion elements extending from said primary protrusion element and running along said line at a second predetermined height that when combined with said first predetermined height of said primary protrusion element is substantially equal to said thickness dimension;
flowing a liquid phase of said substrate material between said mold preforms;
and
allowing substrate material between said mold preforms to set to a self-supporting solid before removing said instrument panel from said mold preforms.
